# EUROPÄISCHE PATENTSCHRIFT

(11) **EP 2 913 119 B1**
(45) Veröffentlichungstag und Bekanntmachung des Hinweises auf die Patenterteilung: **13.07.2016**
(21) Anmeldenummer: 15152888.2
(22) Anmeldetag: 28.01.2015
(51) Int. Cl.: B21F 27/10, B21F 27/20, B23K 11/00, E04H 17/16

(54) **Verfahren und Vorrichtung zur Herstellung von Doppelstabmatten**
Method and device for the manufacture of two rod mats
Procédé et dispositif de fabrication de parois grillagées doubles

(30) Priorität: 28.02.2014 AT 1392014
(43) Veröffentlichungstag der Anmeldung: 02.09.2015
(73) Patentinhaber: Patterer, Christian, 2604 Theresienfeld (AT)
(72) Erfinder: Patterer, Christian, 2604 Theresienfeld (AT)
(74) Vertreter: Schwarz & Partner

(56) Entgegenhaltungen:
- EP-A1- 0 273 901
- EP-A1- 1 110 656
- EP-A2- 0 399 992
- WO-A1-89/11933
- WO-A1-2011/114175
- DE-C- 388 076
- DE-U1- 29 518 140
- DE-U1-202004 019 871
- FR-A1- 2 351 729
- GB-A- 372 303
- JP-A- S5 861 976
- JP-U- S53 150 010
- US-A1- 2005 055 949
- US-A1- 2005 055 953
- US-B1- 6 305 432

## Beschreibung

Die Erfindung betrifft das Gebiet von Doppelstabmatten aus voneinander beabstandeten Längsstäben und beidseitig quer zu den Längsstäben verlaufenden Paaren von ersten und zweiten Querstäben.

Insbesondere betrifft die Erfindung ein Verfahren und eine Vorrichtung zur Herstellung einer aus voneinander beabstandeten Längsstäben und beidseitig quer zu den Längsstäben verlaufenden Paaren von ersten und zweiten Querstäben gebildeten Doppelstabmatte (siehe EP 0 273 901 A1).

Aus dem Dokument US 2005/055949 A1 ist ein Drahtgitter für Stuckmontage und seine Herstellung bekannt, die ohne ein Tischsystem erfolgt. Das Drahtgitter ist ein Gitter, bei dem die Querdrähte einlagig, d.h. nur auf einer Seite der Längsdrähte angeordnet sind.

Die EP 0399992 A2 betrifft eine Schweißmaschine zum Herstellen von Gittern aus einander kreuzenden, an den Kreuzungspunkten verschweißten Längs- und Querdrähten, mit mehreren nebeneinander angeordneten Schweißköpfen. Bei dieser Maschine ist jeder Schweißkopf mit einem Positionierwagen kuppelbar und mit diesem längs einer quer zur Längsdraht-Vorschubrichtung über die Schweißmaschinenbreite verlaufenden Fahrbahn verfahrbar. Der Positionierwagen ist zwischen einer Parkposition und einer Arbeitsposition vertikal verstellbar und auf Laufschienen, die an einem sich über die Schweißmaschinenbreite erstreckenden Fahrbahnträger angeordnet sind, horizontal quer zur Längsdraht-Vorschubrichtung verfahrbar. Die Schweißköpfe sind in Abhängigkeit von der geforderten Längsdrahtteilung im herzustellenden Gitter horizontal in einer Schweißlinie angeordnet. Die Arbeitsweise dieser Schweißmaschine ist so, dass die Längsdrähte und die Querdrähte bewegt werden. Insbesondere ist nur eine Querdrahtposition vorgesehen, d.h. es wird kein Tischsystem verwendet. Diese Maschine eignet sich nicht zur Herstellung von Doppelstabmatten aus voneinander beabstandeten Längsstäben, sondern nur zur Herstellung von Matten aus Draht mit einlagigen Längsdrähten und Querdrähten.

Auf dem Markt sind bereits Doppelstabmatten aus voneinander beabstandeten Längsdrähten und beidseitig quer zu den Längsdrähten verlaufenden Paaren von ersten und zweiten Querdrähten bekannt, wobei die Drähte aus Stahl bestehen. Solche Doppelstabmatten finden zur Erstellung von Zäunen und Absperrungen vielfach Verwendung.

Es besteht jedoch ein Bedürfnis nach Doppelstabmatten aus voneinander beabstandeten Längsstäben und beidseitig quer zu den Längsstäben verlaufenden Paaren von ersten und zweiten Querstäben, wobei die Stäbe aus Aluminium oder aus einer Legierung mit Aluminium als Hauptkomponente bestehen. Eine solche Doppelstabmatte würde über hohe Steifigkeit bei geringem Eigengewicht verfügen und gegenüber Umwelteinflüssen robust sein.

Die automatisierte Herstellung solcher Doppelstabmatten scheiterte bis jetzt jedoch daran, dass das Aluminiummaterial nur in Stäben, nicht aber als Drahtrollen erhältlich ist und dass das stoffschlüssige Verbinden der Längsstäbe und Querstäbe an den Kreuzungsstellen eine hohe Präzision verlangt. Diese Präzision ist insbesondere beim Verschweißen der Kreuzungsstellen unabdingbar, denn wenn die Position des Schweißbrenners in Bezug auf die Kreuzungsstelle nicht exakt eingehalten werden kann, gelangt das Schweißzusatzmaterial neben die Kreuzungsstelle und die Stäbe brennen ab, da das Schweißen von Aluminiummaterial bei Temperaturen von mehr als 2000 °C erfolgen muss, um die Oberflächen-Oxidschicht des Aluminiums zu überwinden. Die hohe Schweißtemperatur führt auch ohne Schweißzusatzmaterial zum Abbrennen der Aluminiumstäbe, wenn die Schweißbrennerposition in Bezug auf die Kreuzungsstelle nicht exakt eingehalten werden kann, beispielsweise weil einer der Stäbe verzogen ist. Das Problem der Herstellung einer festen, haltbaren Verbindung der Längsstäbe und Querstäbe an den Kreuzungsstellen tritt aber auch beim Verkleben auf, wenn die Stäbe verzogen sind.

Es ist daher die Aufgabe der vorliegenden Erfindung, eine Doppelstabmatte aus voneinander beabstandeten Längsstäben und beidseitig quer zu den Längsstäben verlaufenden Paaren von ersten und zweiten Querstäben bereitzustellen, wobei die Stäbe aus Aluminium oder aus einer Legierung mit Aluminium als Hauptkomponente bestehen, und die Längsstäbe und die Querstäbe an ihren Kreuzungsstellen miteinander stoffschlüssig verbunden, insbesondere verschweißt oder verklebt sind. Es ist weiters eine Aufgabe der vorliegenden Erfindung ein Verfahren und eine Vorrichtung zur Herstellung einer solchen Doppelstabmatte bereitzustellen, das bzw. die auch dann zumindest teilautomatisiert funktionieren, wenn die Geometrie und Lage der einander kreuzenden Stäbe unvollkommen ist, insbesondere bei verbogenen oder fehlausgerichteten Stäben.

Die Erfindung löst diese Aufgaben durch die Gegenstände mit den Merkmalen der unabhängigen Ansprüche. Vorteilhafte Ausführungsformen der Erfindung sind in den Unteransprüchen und der nachfolgenden Beschreibung sowie den Zeichnungen dargelegt.

Das erfindungsgemäße Verfahren bzw. die erfindungsgemäße Vorrichtung zur Herstellung einer aus voneinander beabstandeten Längsstäben und beidseitig quer zu den Längsstäben verlaufenden Paaren von ersten und zweiten Querstäben gebildeten Doppelstabmatte, bei der die Stäbe aus Aluminium oder aus einer Legierung mit Aluminium als Hauptkomponente bestehen, umfasst:
einen Tisch mit
   - ersten Querstabführungen, die vorzugsweise als Vertiefungen oder Freiräume zwischen Erhöhungen des Tisches ausgebildet sind, in denen die ersten Querstäbe angeordnet werden,
   - Längsstabführungen, die vorzugsweise als Vertiefungen oder Freiräume zwischen Erhöhungen des Tisches ausgebildet sind, in denen die Längsstäbe auf den ersten Querstäben angeordnet werden,
   - vorzugsweise zweiten Querstabführungen, die vorzugsweise als Vertiefungen oder Freiräume zwischen Erhöhungen des Tisches ausgebildet sind, in denen die zweiten Querstäbe auf den Längsstäben angeordnet werden;
eine mechanische Zentriereinheit zum temporären Fixieren zumindest der Längsstäbn, vorzugsweise auch der Querstäbe an den Kreuzungsstellen, wobei die mechanische Zentriereinheit die Stäbe - bezogen auf ihren Durchmesser bzw. ihre Breite - in eine definierte Lage zur Zentriereinheit bringt;
zumindest eine entlang der Längserstreckung der Querstäbe verfahrbare Vorrichtung zum stoffschlüssigen Verbinden, die zwischen einer Verbindeposition, die sich an der Position der Zentriereinheit und dem Durchmesser bzw. der Breite der von der Zentriereinheit gehaltenen Stäbe orientiert, und einer Verfahrposition, in der sie zum nächsten zu verbindenden Kreuzungspunkt verfahrbar ist, bewegt wird, wobei die Vorrichtung zum stoffschlüssigen Verbinden in der Verbindeposition Querstäbe und Längsstäbe an ihren Kreuzungspunkten stoffschlüssig miteinander verbindet, während die Stäbe von der Zentriereinheit in der definierten Lage gehalten werden.

Mit diesem Verfahren bzw. dieser Vorrichtung hergestellte hochwertige Doppelstabmatten erfüllen alle Anforderungen in Bezug auf Standfestigkeit, Haltbarkeit etc. einer herkömmlichen Stahl-Doppelstabmatte bzw. eines Standard-Aluminiumzaunes, und es ist damit möglich geworden, derartige Doppelstabmatten aus Aluminium bzw. Aluminiumlegierungen maschinell herzustellen. In die Doppelstabmatten können Sichtschutzmatten eingeflochten werden, die auch als Werbebanner oder Trennwände fungieren können. In bevorzugten Ausführungsformen der Doppelstabmatten sind die Längsstäbe und die Querstäbe als Rundstäbe oder Stäbe mit Polygonquerschnitt ausgebildet und weisen optional Verzierungselemente auf, die ebenfalls stoffschlüssig, insbesondere durch Verschweißen oder Verkleben, mit den Stäben verbunden werden. Die Maße von Querstäben und Längsstäben können unterschiedlich sein, beispielsweise können Rundlängsstäbe mit einem Durchmesser von 6 mm mit Rundquerstäben mit einem Durchmesser von 8 mm verbunden werden. Als Beispiele für hervorragend geeignete Aluminiumlegierungen seien AlMgSi1 und AlMgSi0,5 genannt.

Da die Zentriereinheit mechanisch aufgebaut ist, ist sie im Vergleich mit z.B. optischen Systemen sehr robust und nicht anfällig für Fehler und Reparaturen. Sie erzeugt im Moment der Zentrierung, im Gegensatz zu optischen Systemen, den notwendigen Druck, dass die zu verbindenden Stäbe an ihren Kreuzungsstellen ohne Zwischenabstand miteinander stoffschlüssig verbunden werden können.

In einer bevorzugten Ausführungsform der Erfindung ist der Tisch entlang der Längserstreckung der Längsstäbe in Bezug auf die zumindest eine Vorrichtung zum stoffschlüssigen Verbinden verfahrbar, wodurch die Vorrichtung mit hoher Arbeitsgeschwindigkeit automatisiert steuerbar ist und der Tisch mit den Längsstäben und Querstäben in einer von der Vorrichtung zum stoffschlüssigen Verbinden beabstandeten Position beladen werden kann.

Aufgrund des geringen Platzbedarfs, der guten Automatisierbarkeit und der hohen erzielbaren Arbeitsgeschwindigkeit ist es zweckmäßig, wenn die Bewegung der Vorrichtung zum stoffschlüssigen Verbinden zwischen der Verbindeposition und der Verfahrposition eine Hubbewegung (entlang der Z-Achse) oder eine Schwenkbewegung ist. Die Bewegung kann durch Hydraulik- oder Pneumatik-Kolben-Zylinderanordnungen gesteuert werden; alternativ dazu erfüllen elektrische Aktuatoren diese Funktion.

Wenn die Vorrichtung zum stoffschlüssigen Verbinden und die Zentriereinheit aneinander gekoppelt gemeinsam verfahren werden, ist eine hohe Präzision der Einhaltung der relativen Abstände zwischen der Vorrichtung zum stoffschlüssigen Verbinden und der Zentriereinheit garantiert, wodurch auch die Verbindeposition eingehalten wird.

In einer bevorzugten Ausführungsform der Erfindung wird das stoffschlüssige Verbinden der Stäbe an den Kreuzungsstellen durch ein Schweißverfahren realisiert, das aus MIG- , MAG-, WIG-, CMT-, Laser- oder Elektrodenschweißen ausgewählt ist, wobei Schweißzusätze zur Kreuzungsstelle zugeführt werden können. Bei dieser Ausführungsform ist die Vorrichtung zum stoffschlüssigen Verbinden als Schweißbrenner ausgebildet.

In einer alternativen Ausführungsform der Erfindung ist zum stoffschlüssigen Verbinden der Stäbe an den Kreuzungsstellen ein Klebeverfahren vorgesehen, bei dem ein Kleber, der gegebenenfalls mehrere Kleberkomponenten umfasst, zur Kreuzungsstelle zugeführt wird. Die Zufuhr der Kleberkomponenten kann in mehreren Durchgängen unter Einhaltung erforderlicher Trocknungszeiten erfolgen. Bei dieser Ausführungsform ist die Vorrichtung zum stoffschlüssigen Verbinden als Klebestift oder Klebepistole ausgebildet, der/die den Kleber an die Kreuzungsstelle abgibt.

Gemäß einer Ausführungsform des erfindungsgemäßen Verfahrens erfolgt nach dem Anordnen der Längsstäbe auf den ersten Querstäben das stoffschlüssige Verbinden der Kreuzungsstellen der Längsstäbe mit den ersten Querstäben, woraufhin die zweiten Querstäbe auf den Längsstäben angeordnet und darauf folgend die Kreuzungsstellen der Längsstäbe mit den zweiten Querstäbe stoffschlüssig miteinander verbunden werden.

In einer alternativen Ausführungsform des erfindungsgemäßen Verfahrens werden nach dem Anordnen der ersten Querstäbe, der Längsstäbe und der zweiten Querstäbe die Kreuzungsstellen der Längsstäbe mit den ersten Querstäben und die Kreuzungsstellen der Längsstäbe mit den zweiten Querstäbe mittels separater Vorrichtungen zum stoffschlüssigen Verbinden von einander gegenüberliegenden Seiten stoffschlüssig miteinander verbunden.

Die Erfindung wird nun anhand von Ausführungsbeispielen unter Bezugnahme auf die Zeichnungen näher erläutert.
Fig. 1 zeigt ein Ausführungsbeispiel der erfindungsgemäßen Vorrichtung in Draufsicht;
Fig. 2 zeigt die Vorrichtung von Fig. 1 in Seitenansicht entlang der Linie B-B von Fig. 1;
Fig. 3 zeigt eine Detailansicht der erfindungsgemäßen Vorrichtung in der Perspektive;
Fig. 4 zeigt eine Detailansicht einer Variante der erfindungsgemäßen Vorrichtung in der Perspektive;
Fig. 5A zeigt ein mit der erfindungsgemäßen Vorrichtung herstellbares Doppelstabgitter in Draufsicht; und
Fig. 5B zeigt einen Detailschnitt des Doppelstabgitters entlang der Linie A-A von Fig. 5A.

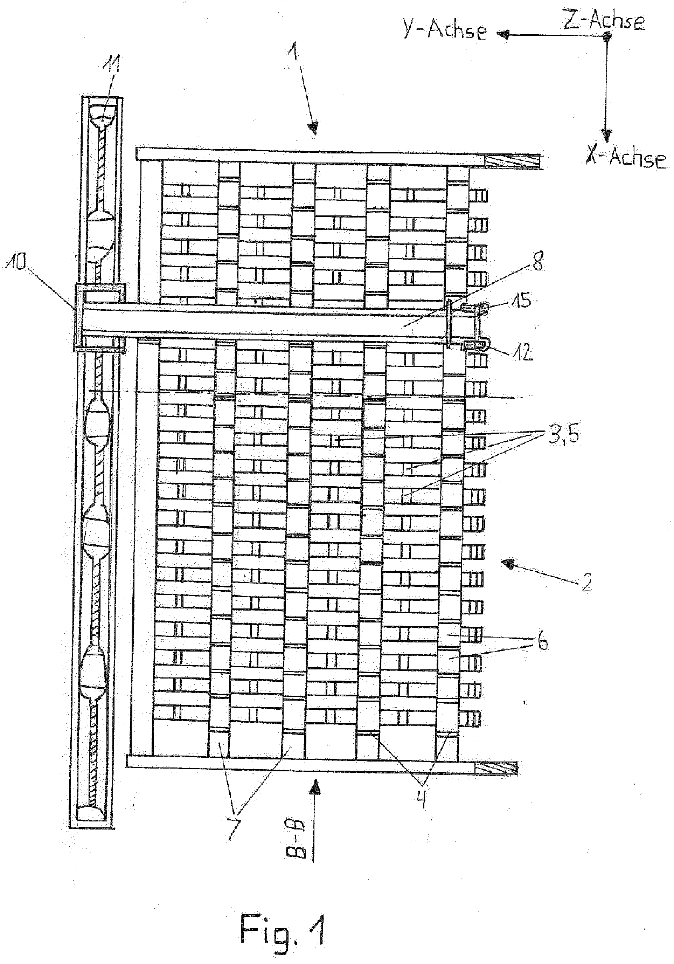

Unter Bezugnahme auf die Figuren 1 bis 4 wird nun eine Ausführungsform einer erfindungsgemäßen Vorrichtung 1 zur Herstellung einer aus voneinander beabstandeten Längsstäben und beidseitig quer zu den Längsstäben verlaufenden Paaren von ersten und zweiten Querstäben gebildeten Doppelstabmatte, wobei die Stäbe aus Aluminium oder aus einer Legierung mit Aluminium als Hauptkomponente bestehen, im Detail erklärt.

Diese Vorrichtung 1 umfasst einen waagrecht aufgestellten Tisch 2, der erste Querstabführungen 3 aufweist, die als Vertiefungen, z.B. in einen Träger 6 eingefräste Nuten ausgebildet sind. Es ist eine Vielzahl von Trägern 6 vorgesehen, die parallel im Abstand zueinander angeordnet sind. In jeden der Träger 6 ist eine Vielzahl von Nuten als erste Querstabführungen 3 eingefräst, wobei die Nuten benachbarter Träger 6 in Längsrichtung hintereinander angeordnet sind, so dass sich eine Vielzahl von geraden Reihen erster Querstabführungen 3 ergibt. Der Tisch 2 wird mit ersten Querstäben 21 beladen, indem die Querstäbe 21 die in die ersten Querstabführungen 3 eingelegt werden. Das Einlegen der ersten Querstäbe 21 kann händisch oder automatisch erfolgen. Der Tisch 2 ist entlang der Y-Achse hin und her bewegbar, so dass ein erster Querstab 21 an einer Querstab-Einlegeposition in eine Reihe erster Querstabführungen 3 eingelegt werden kann und daraufhin der Tisch 2 um den Abstand zwischen dieser und der nächsten Reihe an ersten Querstabführungen 3 weiter bewegt wird, worauf der nächste erste Querstab 21 eingelegt wird. Dieser Vorgang wird für alle Reihen an ersten Querstabführungen 3 wiederholt.

Der Tisch 2 weist weiters Längsstabführungen 4 auf, die als Vertiefungen, z.B. in einen Träger 7 eingefräste Nuten ausgebildet sind. Es ist eine Vielzahl von Trägern 7 vorgesehen, die parallel im Abstand zueinander angeordnet sind. In jeden der Träger 7 ist eine Vielzahl von Nuten als Längsstabführungen 4 eingefräst, wobei die Nuten benachbarter Träger 7 in Längsrichtung hintereinander angeordnet sind, so dass sich eine Vielzahl von geraden Reihen an Längsstabführungen 4 ergibt. Die Längsstäbe 22 werden in die Längsstabführungen 4 eingelegt. Optional kann zur Erleichterung des Einlegens der Tisch 2 in X-Richtung verfahrbar ausgebildet sein. Das Einlegen der Längsstäbe 22 kann händisch oder automatisch erfolgen.

Der Tisch 2 weist in der dargestellten Ausführungsform zweite Querstabführungen 5 zum Einlegen der zweiten Querstäbe 23 auf, die in Kombination mit den ersten Querstabführungen 3 ausgebildet sind, indem die in die Träger 6 eingefrästen Nuten mit einer Tiefe eingefräst werden, die dem Durchmesser der ersten Querstäbe 21 plus dem Durchmesser der Längsstäbe 22 plus zumindest einem Teil des Durchmessers der zweiten Querstäbe 23 entspricht. In anderen Worten dient der untere Teil der Nuten in den Trägern 6 als erste Querstabführungen 3 und der obere Teil der Nuten als zweite Querstabführungen 5.

Der Tisch 2 kann weitere Aussparungen für Zierelemente etc. aufweisen. Die Träger 6, 7 sind soweit voneinander beabstandet, dass sie das stoffschlüssige Verbinden der Querstäbe 21, 23 mit den Längsstäben 22 nicht behindern.

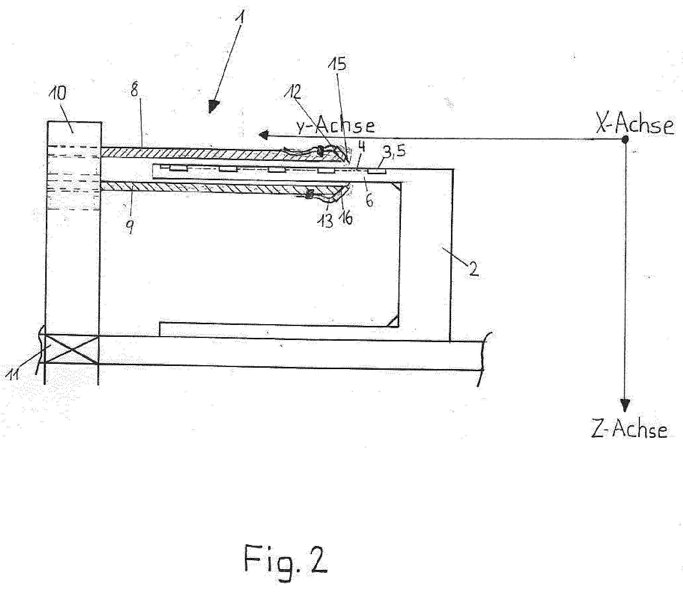

An freien Enden von zwei übereinander angeordneten Auslegern 8, 9 (siehe insbesondere Fig. 2), von denen ein Ausleger 8 über der Oberseite des Tisches 2 angeordnet ist und der zweite Ausleger 9 unter der Unterseite des Tisches 2 angeordnet ist, ist jeweils eine Vorrichtung 12, 13 zum stoffschlüssigen Verbinden angebracht, die bei diesem Ausführungsbeispiel als Schweißbrenner ausgebildet ist. Weiters ist am freien Ende des oberen Auslegers 8 eine mechanische Zentriereinheit 15 zum temporären Fixieren zumindest der Längsstäbe 22, vorzugsweise auch der ersten und zweiten Querstäbe 21, 23 an ihren Kreuzungsstellen 25, 26 angebracht. Die mechanische Zentriereinheit 15 bringt die Längsstäbe 22 und die ersten und/oder zweiten Querstäbe 21, 23, bezogen auf ihren Durchmesser (bei Rundstäben bzw. Stäben mit Polygonquerschnitt) bzw. ihre Breite (bei Flachstäben) in eine definierte Lage zur Zentriereinheit 15. Optional ist zusätzlich oder als Alternative am unteren Ausleger 9 eine mechanische Zentriereinheit 16 zum temporären Fixieren zumindest der Längsstäbe 22, vorzugsweise auch der ersten und/oder zweiten Querstäbe 21, 23 an ihren Kreuzungsstellen 25, 26 angebracht. Die Ausleger 8, 9 sind an einem Schlitten 10 montiert, der mittels eines Antriebs 11, z.B. eines Spindelantriebs, entlang der X-Achse, d.h. parallel zur Längserstreckung der Querstäbe 21, 23 hin und her verfahrbar ist, wodurch auch die verfahrbaren Vorrichtungen 12, 13 zum stoffschlüssigen Verbinden entlang der X-Achse verfahrbar sind. In der vorliegenden Ausführungsform ist der Tisch 2 entlang der Y-Achse verfahrbar, so dass die Vorrichtungen 12, 13 zum stoffschlüssigen Verbinden in Bezug auf die Y-Achse starr montiert sein können. In einer alternativen Ausführungsform kann man jedoch die die Vorrichtungen 12, 13 zum stoffschlüssigen Verbinden in Bezug auf die Y-Achse beweglich an den Auslegern 8, 9 anordnen, wobei in diesem Fall zweckmäßig auch die Zentriereinheiten 15, 16 gemeinsam mit den Vorrichtungen 12, 13 zum stoffschlüssigen Verbinden in Bezug auf die Y-Achse verfahrbar sind. Bei dieser alternativen Ausführungsform kann der Tisch 2 starr montiert sein.

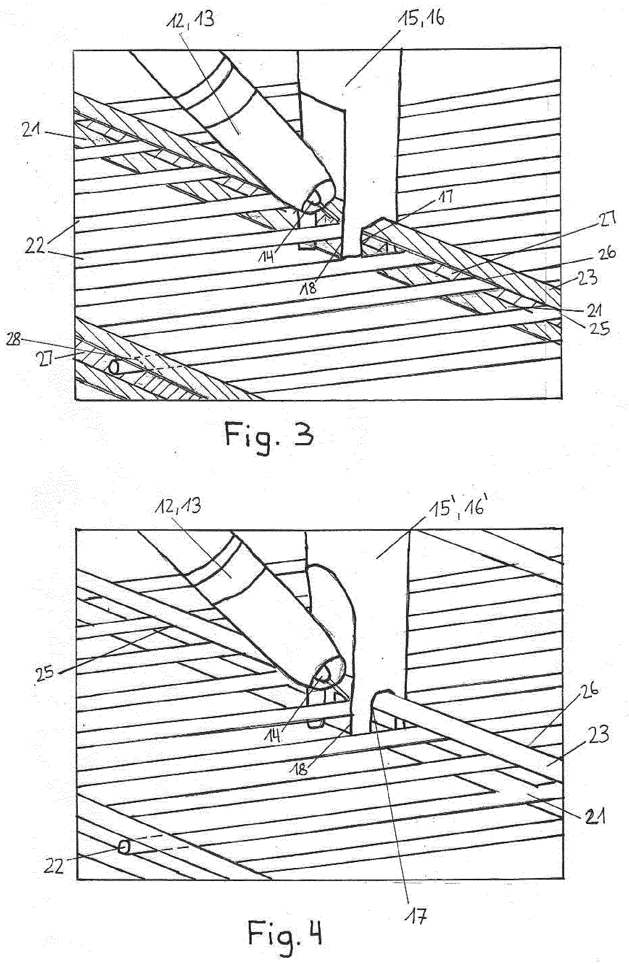

Die Vorrichtungen 12, 13 zum stoffschlüssigen Verbinden sind zwischen einer Verbindeposition, dargestellt in den Figuren 3 und 4, die sich an der Position der Zentriereinheit und dem Durchmesser bzw. der Breite der von der Zentriereinheit gehaltenen Stäbe orientiert, und einer Verfahrposition, dargestellt in Fig. 2, in der die Vorrichtungen 12, 13 zum stoffschlüssigen Verbinden zum nächsten zu verbindenden Kreuzungspunkt 25, 26 verfahren werden, bewegbar. In der Verbindeposition verbinden die Vorrichtungen 12, 13 zum stoffschlüssigen Verbinden Querstäbe 21, 23 und Längsstäbe 22 an ihren Kreuzungspunkten 25, 26 stoffschlüssig miteinander, während die Stäbe 21, 22, 23 von der Zentriereinheit 15, 16 in der definierten Lage gehalten werden. Die Bewegung der Vorrichtungen 12, 13 zum stoffschlüssigen Verbinden zwischen der Verbindeposition und der Verfahrposition ist in der dargestellten Ausführungsform eine durch pneumatische, hydraulische oder elektrische Aktuatoren gesteuerte Hubbewegung entlang der Z-Achse, alternativ dazu eine Schwenkbewegung. Wie erwähnt, sind die Vorrichtungen 12, 13 zum stoffschlüssigen Verbinden als Schweißbrenner ausgebildet und umfassen optional eine Zuführeinrichtung 14 für Schweißzusätze. Als alternative Ausgestaltung können die Vorrichtungen zum stoffschlüssigen Verbinden als Klebestift oder Klebepistole ausgebildet sein, die einen Kleber, der gegebenenfalls mehrere Kleberkomponenten umfasst, an die Kreuzungsstellen 25, 26 abgeben. Geeignete Kleber sind beispielsweise 2K-PUR-Reaktionsklebstoffe.

Die Zentriereinheit 15, 16 ist zwischen einer Fixierstellung (in Fig. 3 und Fig. 4 dargestellt) und einer Freigabestellung (Fig. 2) heb- und senkbar und weist zumindest eine Aussparung 17, 18, auf, in diesem Ausführungsbeispiel quer zueinander angeordnete Aussparungen 17, 18 zum temporären Umgreifen und Fixieren von Längsstäben 22 und Querstäben 21, 23, wenn die Zentriereinheit 15, 16 in der Fixierstellung ist. Vorzugsweise sind die Aussparungen 17, 18 von einem offenen äußeren Ende ausgehend sich verjüngend ausgebildet, wodurch fehlausgerichtete Stäbe 21, 22, 23 in eine wohlausgerichtete Stellung gebracht werden.

Die erfindungsgemäße Vorrichtung 1 kann so betrieben werden, dass nach dem Anordnen der Längsstäbe 22 auf den ersten Querstäben 21 das stoffschlüssige Verbinden der Kreuzungsstellen 25 der Längsstäbe 22 und der ersten Querstäbe 21 erfolgt, wofür nur eine Zentriereinheit 15, 16 und nur eine Vorrichtung 12, 13 zum stoffschlüssigen Verbinden benötigt wird. Anschließend werden die zweiten Querstäbe 23 auf den Längsstäben 21 angeordnet und die Kreuzungsstellen 26 der Längsstäbe 22und der zweiten Querstäbe 23 stoffschlüssig miteinander verbunden. Alternativ dazu kann die Vorrichtung 1 so betrieben werden, dass zunächst die ersten Querstäbe 21, dann die Längsstäbe 22, gefolgt von den zweiten Querstäben 23 auf dem Tisch 2 angeordnet werden. Danach werden die Kreuzungsstellen 25 der Längsstäbe 22 und der ersten Querstäbe 21 und die Kreuzungsstellen 26 der Längsstäbe 22 und der zweiten Querstäbe 23 mittels der beiden Vorrichtungen 15, 16 zum stoffschlüssigen Verbinden von einander gegenüberliegenden Seiten (Oberseite und Unterseite des Tisches 2) stoffschlüssig miteinander verbunden.

Nach dem stoffschlüssigen Verbinden wird der Tisch 2 zurückgefahren und kann entladen und wieder neu bestückt werden. Es ist auch möglich, mehrere Tische 2 vorzusehen, die wechselweise zwischen die Ausleger 8, 9 eingefahren werden.

Die in Fig. 3 gezeigte Zentriervorrichtung 15, 16 weist eine Vierkantform auf, in deren Wänden die Aussparungen 17, 18 ausgebildet sind. Bei dieser Ausführungsform wird eine Doppelstabmatte hergestellt, bei der die ersten Querstäbe 21 und die zweiten Querstäbe 23 als flache Stäbe ausgebildet sind, die an einer Seite mit einer Seitenwand 27 verbunden sind und dadurch ein U-Profil bilden. In der Seitenwand 27 sind Durchgangslöcher 28 ausgebildet, durch die die Längsstäbe 22 beim Einlegen hindurchgefädelt werden. Fig. 4 zeigt eine Variante einer Zentriervorrichtung 15', 16', die zur Zentrierung von Rundstäben 21, 22, 23 ausgebildet ist, wofür die Aussparungen 17, 18 von einem offenen äußeren Ende ausgehend sich verjüngend ausgebildet sind.

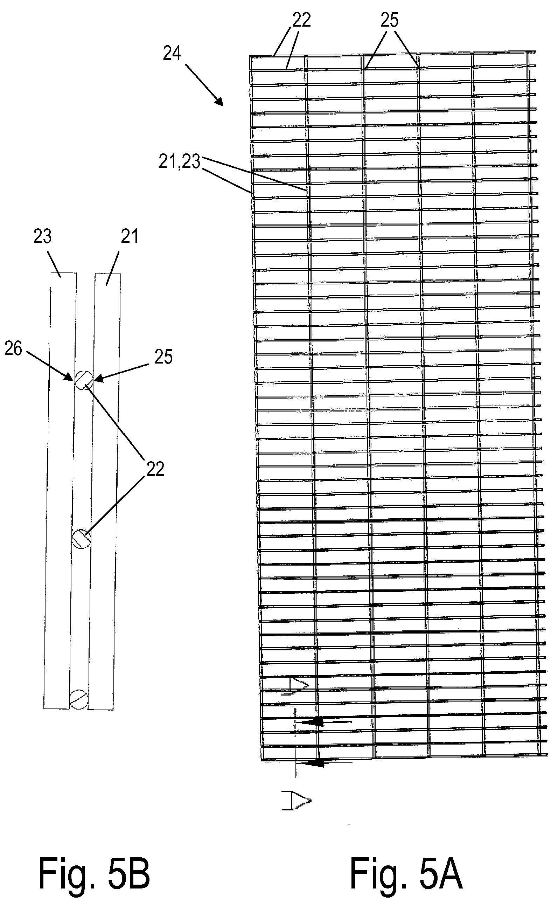

In Fig. 5A ist eine Doppelstabmatte 20 aus voneinander beabstandeten Längsstäben 22 und beidseitig quer zu den Längsstäben verlaufenden Paaren von ersten und zweiten Querstäben 21, 23 in Draufsicht gezeigt. Fig. 5B zeigt einen Schnitt durch die Doppelstabmatte 20 entlang der Linie A-A von Fig. 5A. Die Längsstäbe 22 und die ersten und zweiten Querstäben 21, 23 bestehen aus Aluminium oder aus einer Legierung mit Aluminium als Hauptkomponente. Die Längsstäbe 22 sind mit den Querstäben 21, 23 an ihren Kreuzungsstellen 25, 26 miteinander durch Schweißen stoffschlüssig verbunden. Die Längsstäbe 22 sind Rundstäbe mit Durchmessern von 6 oder 8 mm. Die Querstäbe 21, 23 sind Rundstäbe mit Durchmessern von 8 oder 10 mm. Alle Stäbe sind aus Vollmaterial gefertigt. Die Paare von Querstäben 21, 23 weisen einen regelmäßigen Abstand von z.B. 20 cm voneinander auf. Die Längsstäbe 22 sind in Abständen von z.B. 5 cm angeordnet. Die Breite einer Doppelstabmatte 20 beträgt typischerweise 250 cm, die Höhe kann in diversen Abstufungen gewählt werden.

## Patentansprüche

1. Verfahren zur Herstellung einer aus voneinander beabstandeten Längsstäben (22) und beidseitig quer zu den Längsstäben verlaufenden Paaren von ersten und zweiten Querstäben (21, 23) gebildeten Doppelstabmatte (20), **dadurch gekennzeichnet, dass** die Stäbe (21, 22, 23) aus Aluminium oder aus einer Legierung mit Aluminium als Hauptkomponente bestehen, umfassend
das Anordnen der ersten Querstäbe (21) auf einem Tisch (2) in ersten Querstabführungen (3), die vorzugsweise als Vertiefungen oder Freiräume zwischen Erhöhungen des Tisches ausgebildet sind,
das Anordnen der Längsstäbe (22) auf den ersten Querstäben (21) in Längsstabführungen (4), die vorzugsweise als Vertiefungen oder Freiräume zwischen Erhöhungen des Tisches (2) ausgebildet sind,
das Anordnen der zweiten Querstäbe (23) auf den Längsstäben (22), insbesondere in zweiten Querstabführungen (5), die vorzugsweise als Vertiefungen oder Freiräume zwischen Erhöhungen des Tisches ausgebildet sind,
das temporäre Fixieren zumindest der Längsstäbe (22), vorzugsweise auch der Querstäbe (21, 23) an den Kreuzungsstellen (25, 26) mittels einer mechanischen Zentriereinheit (15, 16, 15', 16'), die zumindest die Längsstäbe (22), bevorzugt auch die Querstäbe (21, 23) - bezogen auf ihren Durchmesser bzw. ihre Breite - in eine definierte Lage zur Zentriereinheit (15, 16, 15', 16') bringt,
das stoffschlüssige Verbinden der Querstäbe (21, 23) mit den Längsstäben (22) an den Kreuzungspunkten (25, 26) mittels zumindest einer entlang der Längserstreckung der Querstäbe (21, 23) verfahrbaren (X-Achse) Vorrichtung (12, 13) zum stoffschlüssigen Verbinden, während die Stäbe von der Zentriereinheit (15, 16, 15', 16') in der definierten Lage gehalten werden, wobei die Vorrichtung (12, 13) zum stoffschlüssigen Verbinden zwischen einer Verbindeposition, die an der Position der Zentriereinheit (15, 16, 15', 16') und dem Durchmesser bzw. der Breite der von der Zentriereinheit gehaltenen Stäbe (21, 22, 23) orientiert wird, und einer Verfahrposition, in der sie zum nächsten stoffschlüssig zu verbindenden Kreuzungspunkt (25, 26) verfährt, bewegbar ist, wobei die Vorrichtung (12, 13) zum stoffschlüssigen Verbinden in der Verbindeposition Querstäbe (21, 23) und Längsstäbe (22) an ihren Kreuzungspunkten (25, 26) stoffschlüssig miteinander verbindet.

2. Verfahren nach Anspruch 1, **dadurch gekennzeichnet, dass** der Tisch (2) und/oder die zumindest eine Vorrichtung (12, 13) zum stoffschlüssigen Verbinden entlang der Längserstreckung der Längsstäbe (22) relativ zueinander verfahrbar (Y-Achse) sind.

3. Verfahren nach Anspruch 1 oder 2, **dadurch gekennzeichnet, dass** die Bewegung der Vorrichtung (12, 13) zum stoffschlüssigen Verbinden zwischen der Verbindeposition und der Verfahrposition eine Hubbewegung (Z-Achse) oder eine Schwenkbewegung ist.

4. Verfahren nach einem der vorhergehenden Ansprüche, **dadurch gekennzeichnet, dass** die Vorrichtung (12, 13) zum stoffschlüssigen Verbinden und die Zentriereinheit (15, 16, 15', 16') aneinander gekoppelt gemeinsam verfahren werden.

5. Verfahren nach einem der vorhergehenden Ansprüche, **dadurch gekennzeichnet, dass** das stoffschlüssige Verbinden ein Schweißverfahren, ausgewählt aus MIG- , MAG-, WIG-, CMT-, Laser- oder Elektrodenschweißen ist, das optional mittels Zufuhr von Schweißzusätzen durchgeführt wird, und die Vorrichtung (12, 13) zum stoffschlüssigen Verbinden ein Schweißbrenner ist.

6. Verfahren nach einem der Ansprüche 1 bis 4, **dadurch gekennzeichnet, dass** das stoffschlüssige Verbinden ein Klebeverfahren ist, bei dem ein Kleber, der gegebenenfalls mehrere Kleberkomponenten umfasst, zur Kreuzungsstelle (25, 26) zugeführt wird, und die Vorrichtung (12, 13) zum stoffschlüssigen Verbinden ein Klebestift oder eine Klebepistole ist, der/die den Kleber an die Kreuzungsstelle abgibt.

7. Verfahren nach einem der vorhergehenden Ansprüche, **dadurch gekennzeichnet, dass** nach dem Anordnen der Längsstäbe (22) auf den ersten Querstäben (21) das stoffschlüssige Verbinden der Kreuzungsstellen (25) der Längsstäbe (22) mit den ersten Querstäben (21) erfolgt, woraufhin die zweiten Querstäbe (23) auf den Längsstäben (22) angeordnet und die Kreuzungsstellen (26) der Längsstäbe mit den zweiten Querstäben (23) stoffschlüssig miteinander verbunden werden.

8. Verfahren nach einem der Ansprüche 1 bis 6, **dadurch gekennzeichnet, dass** nach dem Anordnen der ersten Querstäbe (21), der Längsstäbe (22) und der zweiten Querstäbe (23) die Kreuzungsstellen (25) der Längsstäbe (22) mit den ersten Querstäben (21) und die Kreuzungsstellen (26) der Längsstäbe (22) mit den zweiten Querstäben (23) mittels separater Vorrichtungen (12, 13) zum stoffschlüssigen Verbinden von einander gegenüberliegenden Seiten stoffschlüssig miteinander verbunden werden.

9. Vorrichtung (1) zur Herstellung einer aus voneinander beabstandeten Längsstäben (22) und beidseitig quer zu den Längsstäben verlaufenden Paaren von ersten und zweiten Querstäben (21, 23) gebildeten Doppelstabmatte (20), **dadurch gekennzeichnet, dass** die Stäbe (21, 22, 23) aus Aluminium oder aus einer Legierung mit Aluminium als Hauptkomponente bestehen, mit
einem Tisch (2) mit
- ersten Querstabführungen (3), die vorzugsweise als Vertiefungen oder Freiräume zwischen Erhöhungen des Tisches ausgebildet sind, zum Anordnen der ersten Querstäbe auf dem Tisch,
- Längsstabführungen (4), die vorzugsweise als Vertiefungen oder Freiräume zwischen Erhöhungen des Tisches ausgebildet sind, zum Anordnen der Längsstäbe auf den ersten Querstäben,
- vorzugsweise zweiten Querstabführungen (5), die vorzugsweise als Vertiefungen oder Freiräume zwischen Erhöhungen des Tisches ausgebildet sind, zum Anordnen der zweiten Querstäbe auf den Längsstäben,
einer mechanischen Zentriereinheit (15, 16, 15', 16') zum temporären Fixieren zumindest von Längsstäben (22), vorzugsweise auch von Querstäben (21, 23) an ihren Kreuzungsstellen (25, 26), wobei die mechanische Zentriereinheit (15, 16, 15', 16') die Stäbe (21, 22, 23) - bezogen auf ihren Durchmesser bzw. ihre Breite - in eine definierte Lage zur Zentriereinheit bringt,
zumindest eine entlang der Längserstreckung der Querstäbe (21, 23) verfahrbare (X-Achse) Vorrichtung (12, 13) zum stoffschlüssigen Verbinden, wobei die Vorrichtung (12, 13) zum stoffschlüssigen Verbinden zwischen einer Verbindeposition, die sich an der Position der Zentriereinheit (15, 16, 15', 16') und dem Durchmesser bzw. der Breite der von der Zentriereinheit gehaltenen Stäbe (21, 22, 23) orientiert, und einer Verfahrposition, in der sie zum nächsten zu verbindenden Kreuzungspunkt (25, 26) verfahrbar ist, bewegbar ist, wobei die Vorrichtung (12, 13) zum stoffschlüssigen Verbinden in der Verbindeposition Querstäbe mit Längsstäben an den Kreuzungspunkten stoffschlüssig miteinander verbindet, während die Stäbe (21, 22, 23) von der Zentriereinheit (15, 16, 15', 16') in der definierten Lage gehalten werden.

10. Vorrichtung nach Anspruch 9, **dadurch gekennzeichnet, dass** der Tisch (2) und die zumindest eine Vorrichtung (12, 13) zum stoffschlüssigen Verbinden entlang der Längserstreckung der Längsstäbe (22) relativ zueinander verfahrbar (Y-Achse) sind.

11. Vorrichtung nach Anspruch 9 oder 10, **dadurch gekennzeichnet, dass** die Bewegung der Vorrichtung (12, 13) zum stoffschlüssigen Verbinden zwischen der Verbindeposition und der Verfahrposition eine Hubbewegung (Z-Achse) oder eine Schwenkbewegung ist.

12. Vorrichtung nach einem der Ansprüche 9 bis 11, **dadurch gekennzeichnet, dass** die mechanische Zentriereinheit (15, 16, 15', 16') entlang der Längserstreckung der Querstäbe (21, 23) verfahrbar (X-Achse) ist, wobei vorzugsweise die Vorrichtung (12, 13) zum stoffschlüssigen Verbinden und die Zentriereinheit (15, 16, 15', 16') aneinander gekoppelt gemeinsam verfahrbar sind.

13. Vorrichtung nach einem der Ansprüche 9 bis 12, **dadurch gekennzeichnet, dass** die Vorrichtung (12, 13) zum stoffschlüssigen Verbinden ein Schweißbrenner, ausgewählt aus MIG- , MAG-, WIG-, CMT-, Laser- oder Elektrodenschweißbrennern ist, der optional eine Zuführeinrichtung (14) für Schweißzusätze aufweist.

14. Vorrichtung nach einem der Ansprüche 9 bis 12, **dadurch gekennzeichnet, dass** die Vorrichtung (12, 13) zum stoffschlüssigen Verbinden ein Klebestift oder eine Klebepistole ist, der/die einen Kleber, der gegebenenfalls mehrere Kleberkomponenten umfasst, an die Kreuzungsstelle (25, 26) abgibt.

15. Vorrichtung nach einem der Ansprüche 9 bis 14, **dadurch gekennzeichnet, dass** Vorrichtungen (12, 13) zum stoffschlüssigen Verbinden an der Oberseite und an der Unterseite des Tisches angeordnet sind.

16. Vorrichtung nach einem der Ansprüche 9 bis 14, **dadurch gekennzeichnet, dass** die Zentriereinheit (15, 16, 15', 16') zwischen einer Fixierstellung und einer Freigabestellung heb- und senkbar ist und zumindest eine Aussparung (17, 18), vorzugsweise quer zueinander angeordnete Aussparungen (17, 18) zum temporären Umfassen und Fixieren von Stäben (21, 22, 23) aufweist, wenn die Zentriereinheit (15, 16, 15', 16') in der Fixierstellung ist, wobei vorzugsweise die Aussparungen (17, 18) von einem offenen äußeren Ende ausgehend sich verjüngend ausgebildet sind.

## Claims

1. A method for the production of a double-rod mat (20) formed of longitudinal rods (22) spaced apart from each other and pairs of first and second transverse rods (21, 23) extending transversely to the longitudinal rods on both sides, **characterized in that** the rods (21, 22, 23) are made from aluminium or an alloy with aluminium being the main component, comprising
arranging the first transverse rods (21) on a table (2) in first transverse rod guides (3), which are preferably formed as recesses or spaces between elevations of the table, arranging the longitudinal rods (22) on the first transverse rods (21) in longitudinal rod guides (4), which are preferably formed as recesses or spaces between elevations of the table (2),
arranging the second transverse rods (23) on the longitudinal rods (22), in particular in second transverse rod guides (5), which are preferably formed as recesses or spaces between elevations of the table,
temporarily fixing at least the longitudinal rods (22), preferably also the transverse rods (21, 23), at the crossing points (25, 26) by means of a mechanical centering unit (15, 16, 15', 16'), which aligns the longitudinal rods (22), preferably also the transverse rods (21, 23) - based on the diameter or width, respectively, thereof - into a defined position in respect to the centering unit (15, 16, 15', 16'),
cohesively connecting the transverse rods (21, 23) with the longitudinal rods (22) at the crossing points (25, 26) by means of at least one device (12, 13) for the cohesive connection that may be conveyed along the longitudinal extension of the transverse rods (21, 23) (x-axis), whereas the rods are held in the defined position by the centering unit (15, 16, 15', 16'), wherein the device (12, 13) for the cohesive connection may be moved between a connecting position, which is oriented towards the position of the centering unit (15, 16, 15', 16') and the diameter or the width, respectively, of the rods (21, 22, 23) held by the centering unit, and a conveying position, in which it is conveyed to the next crossing point (25, 26) to be cohesively connected, wherein the device (12, 13) for the cohesive connection connects in the connecting position transverse rods (21, 23) and longitudinal rods (22) at the crossing points (25, 26) thereof in a cohesive way.

2. A method according to claim 1, **characterized in that** the table (2) and/or the at least one device (12, 13) for the cohesive connection may be conveyed along the longitudinal extension of the longitudinal rods (22) relative to each other (y-axis).

3. A method according to claim 1 or 2, **characterized in that** the movement of the device (12, 13) for the cohesive connection is a stroke movement (z-axis) or a pivoting movement between the connecting position and the conveying position.

4. A method according to any of the preceding claims, **characterized in that** the device (12, 13) for the cohesive connection and the centering unit (15, 16, 15', 16') are conveyed coupled to each other.

5. A method according to any of the preceding claims, **characterized in that** cohesive connecting is a welding method, selected from MIG, MAG, GTAW, CMT, laser or electrode welding, which is optionally performed by means of feeding welding additives, and that the device (12, 13) for the cohesive connection is a welding torch.

6. A method according to any of the claims 1 to 4, **characterized in that** cohesive connecting is a bonding method, wherein an adhesive, which optionally comprises several adhesive components, is fed to the crossing point (25, 26), and wherein the device (12, 13) for the cohesive connection is an adhesive pin or an adhesive gun, which discharges the adhesive to the crossing point.

7. A method according to any of the preceding claims, **characterized in that**, following the arrangement of the longitudinal rods (22) on the first transverse rods (21), the cohesive connection of the crossing points (25) of the longitudinal rods (22) with the first transverse rods (21) is performed, whereupon the second transverse rods (23) are arranged on the longitudinal rods (22) and the crossing points (26) of the longitudinal rods (23) are cohesively connected with the second transverse rods (23).

8. A method according to any of claims 1 to 6, **characterized in that**, following the arrangement of the first transverse rods (21), the longitudinal rods (22) and the second transverse rods (23), the crossing points (25) of the longitudinal rods (22) with the first transverse rods (21) and the crossing points (26) of the longitudinal rods (22) with the second transverse rods (23) are cohesively connected by means of separate devices (12, 13) for the cohesive connection of surfaces that are opposite to one another.

9. A device (1) for the production of a double-rod mat (20) formed of longitudinal rods (22) spaced apart from each other and pairs of first and second transverse rods (21, 23) extending transversely to the longitudinal rods on both sides, **characterized in that** the rods (21, 22, 23) are made from aluminium or an alloy with aluminium being the main component, having
a table (2) with
- first transverse rod guides (3), which are preferably formed as recesses or spaces between elevations of the table, for arranging the first transverse rods on the table,
- longitudinal rod guides (4), which are preferably formed as recesses or spaces between elevations of the table, for arranging the longitudinal rods on the first transverse rods,
- preferably second transverse rod guides (5), which are preferably formed as recesses or spaces between elevations of the table, for arranging the second transverse rods on the longitudinal rods,
a mechanical centering unit (15, 16, 15', 16') for temporarily fixing at least longitudinal rods (22), preferably also transverse rods (21, 23), at the crossing points (25, 26) thereof, wherein the mechanical centering unit (15, 16, 15', 16') aligns the rods (21, 22, 23) - based on the diameter or width, respectively thereof - into a defined position in respect to the centering unit,
at least one device (12, 13) for the cohesive connection that may be conveyed along the longitudinal extension of the transverse rods (21, 23) (x-axis), wherein the device (12, 13) for the cohesive connection may be moved between a connecting position, which is oriented towards the position of the centering unit (15, 16, 15', 16') and the diameter or the width, respectively, of the rods (21, 22, 23) held by the centering unit, and a conveying position, in which it is conveyed to the next crossing point (25, 26) to be connected, wherein the device (12, 13) for the cohesive connection connects in the connecting position transverse rods and longitudinal rods at the crossing points in a cohesive way, whereas the rods (21, 22, 23) are held in the defined position by the centering unit (15, 16, 15', 16').

10. A device according to claim 9, **characterized in that** the table (2) and the at least one device (12, 13) for the cohesive connection may be conveyed along the longitudinal extension of the longitudinal rods (22) relative to one another (y-axis).

11. A device according to claim 9 or 10, **characterized in that** the movement of the device (12, 13) for the cohesive connection is a stroke movement (z-axis) or a pivoting movement between the connecting position and the conveying position.

12. A method according to any of claims 9 to 11, **characterized in that** the mechanical centering unit (15, 16, 15', 16') may be conveyed along the longitudinal extension of the transverse rods (21, 23) (x-axis), wherein the device (12, 13) for the cohesive connection and the centering unit (15, 16, 15', 16') are conveyed preferably coupled to each other.

13. A method according to any of the claims 9 to 12, **characterized in that** the device (12, 13) for the cohesive connection is a welding torch, selected from MIG, MAG, GTAW, CMT, laser or electrode welding torches, which optionally has a feeding device (14) for welding additives.

14. A device according to any of claims 9 to 12, **characterized in that** the device (12, 13) for the cohesive connection is an adhesive pin or an adhesive gun, which discharges to the crossing point (25, 16) an adhesive, which optionally comprises several adhesive components.

15. A device according to any of claims 9 to 14, **characterized in that** the devices (12, 13) for the cohesive connection are arranged at the upper surface and at the lower surface of the table.

16. A device according to any of the claims 9 to 14, **characterized in that** the centering unit (15, 16, 15', 16') may be lifted and lowered between a fixing position and a releasing position and has at least one recess (17, 18), preferably recesses (17, 18) arranged transversely to each other for temporarily comprising and fixing rods (21, 22, 23), if the centering unit (15, 16, 15', 16') is in the fixing position, wherein the recesses (17, 18) are preferably formed in a tapered way starting from an open outer end.

## Revendications

1. Procédé de fabrication d'une paroi grillagée double (20) constituée de barres longitudinales (22) espacées entre elles et de paires de premières et de deuxièmes barres transversales (21, 23) s'étendant transversalement aux barres longitudinales de part et d'autre de celles-ci, **caractérisé en ce que** les barres (21, 22, 23) sont en aluminium ou en un alliage avec de l'aluminium en tant que composant principal, comprenant
la disposition des premières barres transversales (21) sur une table (2) dans de premiers guidages de barres transversales (3), formés préférentiellement comme cavités ou dégagements entre des reliefs de la table,
la disposition des barres longitudinales (22) sur les premières barres transversales (21) dans les guidages de barres longitudinales (4), formés préférentiellement comme cavités ou dégagements entre des reliefs de la table (2),
la disposition des deuxièmes barres transversales (23) sur les barres longitudinales (22), en particulier dans de deuxièmes guidages de barres transversales (5), formés préférentiellement comme cavités ou dégagements entre des reliefs de la table,
la fixation temporaire au moins des barres longitudinales (22), préférentiellement aussi des barres transversales (21, 23) aux points de croisement (25, 26) au moyen d'une unité de centrage mécanique (15, 16, 15', 16') mettant au moins les barres longitudinales (22), préférentiellement aussi les barres transversales (21, 23) dans une position définie sur l'unité de centrage (15, 16, 15', 16') - en fonction de leur diamètre ou de leur largeur,
le raccordement par liaison de matière des barres transversales (21, 23) aux barres longitudinales (22) aux points de croisement (25, 26), au moyen d'au moins un dispositif (12, 13) de raccordement par liaison de matière déplaçable sur la longueur des barres transversales (21, 23) (axe X), tandis que les barres sont maintenues par l'unité de centrage (15, 16, 15', 16') dans la position définie, le dispositif (12, 13) de raccordement par liaison de matière étant mobile entre une position de raccordement, fonction de la position de l'unité de centrage (15, 16, 15', 16') et du diamètre ou de la largeur des barres (21, 22, 23) maintenues par l'unité de centrage, et une position de déplacement, où il se déplace vers le point de croisement (25, 26) à raccorder par liaison de matière suivant, le dispositif (12, 13) de raccordement par liaison de matière raccordant par liaison de matière les barres transversales (21, 23) aux barres longitudinales (22) sur leur points de croisement (25, 26) dans la position de raccordement.

2. Procédé selon la revendication 1, **caractérisé en ce que** la table (2) et/ou ledit au moins un dispositif (12, 13) de raccordement par liaison de matière sont déplaçables l'un par rapport à l'autre sur la longueur des barres longitudinales (22) (axe Y).

3. Procédé selon la revendication 1 ou 2, **caractérisé en ce que** le mouvement du dispositif (12, 13) de raccordement par liaison de matière entre la position de raccordement et la position de déplacement est une élévation (axe Z) ou un pivotement.

4. Procédé selon l'une des revendications précédentes, **caractérisé en ce que** le dispositif (12, 13) de raccordement par liaison de matière et l'unité de centrage (15, 16, 15', 16') sont déplacés ensemble en étant accouplés.

5. Procédé selon l'une des revendications précédentes, **caractérisé en ce que** le raccordement par liaison de matière est un soudage, sélectionné parmi les soudages MIG, MAG, WIG, CMT, laser ou à l'électrode, lequel est facultativement exécuté par amenée de métaux d'apport de soudage, et **en ce que** le dispositif (12, 13) pour le raccordement par liaison de matière est un chalumeau de soudage.

6. Procédé selon l'une des revendications 1 à 4, **caractérisé en ce que** le raccordement par liaison de matière est un collage, où un adhésif comprenant éventuellement plusieurs composants d'adhésif est amené vers le point de croisement (25, 26), et **en ce que** le dispositif (12, 13) de raccordement par liaison de matière est un bâton de colle ou un pistolet de collage délivrant l'adhésif au point de croisement.

7. Procédé selon l'une des revendications précédentes, **caractérisé en ce que** le raccordement par liaison de matière des points de croisement (25) des barres longitudinales (22) aux premières barres transversales (21) est exécuté après la disposition des barres longitudinales (22) sur les premières barres transversales (21), ce après quoi les deuxièmes barres transversales (23) sont disposées sur les barres longitudinales (22) et les points de croisement (26) des barres longitudinales sont raccordés par liaison de matière aux deuxièmes barres transversales (23).

8. Procédé selon l'une des revendications 1 à 6, **caractérisé en ce qu'**après la disposition des premières barres transversales (21), des barres longitudinales (22) et des deuxièmes barres transversales (23), les points de croisement (25) des barres longitudinales (22) sont raccordés aux premières barres transversales (21) et les points de croisement (26) des barres longitudinales (22) aux deuxièmes barres transversales (23) au moyen de dispositifs (12, 13) de raccordement par liaison de matière séparés, depuis des côtés opposés.

9. Dispositif (1) pour la fabrication d'une paroi grillagée double (20) constituée de barres longitudinales (22) espacées entre elles et de paires de premières et de deuxièmes barres transversales (21, 23) s'étendant transversalement aux barres longitudinales de part et d'autre de celles-ci, **caractérisé en ce que** les barres (21, 22, 23) sont en aluminium ou en un alliage avec de l'aluminium en tant que composant principal, comprenant
une table (2) avec
- de premiers guidages de barres transversales (3), formés préférentiellement comme cavités ou dégagements entre des reliefs de la table, pour la disposition des premières barres transversales sur la table,
- des guidages de barres longitudinales (4), formés préférentiellement comme cavités ou dégagements entre des reliefs de la table, pour la disposition des barres longitudinales sur les premières barres transversales,
- préférentiellement de deuxièmes guidages de barres transversales (5), formés préférentiellement comme cavités ou dégagements entre des reliefs de la table, pour la disposition des deuxièmes barres transversales sur les barres longitudinales,
une unité de centrage mécanique (15, 16, 15', 16') pour la fixation temporaire au moins des barres longitudinales (22), préférentiellement aussi des barres transversales (21, 23) sur leurs points de croisement (25, 26), ladite unité de centrage mécanique (15, 16, 15', 16') mettant les barres (21, 22, 23) dans une position définie sur l'unité de centrage - en fonction de leur diamètre ou de leur largeur,
au moins un dispositif (12, 13) de raccordement par liaison de matière déplaçable sur la longueur des barres transversales (21, 23) (axe X), ledit dispositif (12, 13) de raccordement par liaison de matière étant mobile entre une position de raccordement, fonction de la position de l'unité de centrage (15, 16, 15', 16') et du diamètre ou de la largeur des barres (21, 22, 23) maintenues par l'unité de centrage, et une position de déplacement, où il se déplace vers le point de croisement (25, 26) à raccorder par liaison de matière suivant, le dispositif (12, 13) de raccordement par liaison de matière raccordant par liaison de matière les barres transversales aux barres longitudinales sur les points de croisement dans la position de raccordement, tandis que les barres (21, 22, 23) sont maintenues par l'unité de centrage (15, 16, 15', 16') dans la position définie.

10. Dispositif selon la revendication 9, **caractérisé en ce que** la table (2) et ledit au moins un dispositif (12, 13) de raccordement par liaison de matière sont déplaçables l'un par rapport à l'autre sur la longueur des barres longitudinales (22) (axe Y).

11. Dispositif selon la revendication 9 ou 10, **caractérisé en ce que** le mouvement du dispositif (12, 13) de raccordement par liaison de matière entre la position de raccordement et la position de déplacement est une élévation (axe Z) ou un pivotement.

12. Dispositif selon l'une des revendications 9 à 11, **caractérisé en ce que** l'unité de centrage mécanique (15, 16, 15', 16') est déplaçable sur la longueur des barres transversales (21, 23) (axe X), le dispositif (12, 13) de raccordement par liaison de matière et l'unité de centrage (15, 16, 15', 16') étant préférentiellement déplacés ensemble en étant accouplés.

13. Dispositif selon l'une des revendications 9 à 12, **caractérisé en ce que** le dispositif (12, 13) de raccordement par liaison de matière est un chalumeau de soudage, sélectionné parmi des chalumeaux de soudage MIG, MAG, WIG, CMT, laser ou à l'électrode, lequel comporte facultativement un dispositif d'amenée (14) pour des métaux d'apport de soudage.

14. Dispositif selon l'une des revendications 9 à 12, **caractérisé en ce que** le dispositif (12, 13) de raccordement par liaison de matière est un bâton de colle ou un pistolet de collage délivrant un adhésif comprenant éventuellement plusieurs composants d'adhésif au point de croisement (25, 26).

15. Dispositif selon l'une des revendications 9 à 14, **caractérisé en ce que** des dispositifs (12, 13) de raccordement par liaison de matière sont présents sur la face supérieure et sur la face inférieure de la table.

16. Dispositif selon l'une des revendications 9 à 14, **caractérisé en ce que** l'unité de centrage (15, 16, 15', 16') peut être élevée et abaissée entre une position de fixation et une position de libération et présente au moins un évidement (17, 18), préférentiellement des évidements (17, 18) transversaux l'un à l'autre pour la saisie et la fixation temporaire de barres (21, 22, 23) quand l'unité de centrage (15, 16, 15', 16') est en position de fixation, les évidements (17, 18) s'amincissant préférentiellement depuis une extrémité extérieure ouverte.
